(19) Europäisches Patentamt
European Patent Office
Office européen des brevets

(11) EP 4 542 681 A1

(12) **EUROPEAN PATENT APPLICATION**
published in accordance with Art. 153(4) EPC

(43) Date of publication:
**23.04.2025 Bulletin 2025/17**

(21) Application number: **23907853.8**

(22) Date of filing: **22.12.2023**

(51) International Patent Classification (IPC):
*H01M 4/38* (2006.01)   *H01M 4/48* (2010.01)
*H01M 4/587* (2010.01)   *H01M 4/134* (2010.01)
*H01M 4/62* (2006.01)   *H01M 10/0525* (2010.01)
*H01M 4/02* (2006.01)

(52) Cooperative Patent Classification (CPC):
**H01M 4/02; H01M 4/134; H01M 4/38; H01M 4/48;**
**H01M 4/587; H01M 4/62; H01M 10/0525**

(86) International application number:
**PCT/KR2023/021388**

(87) International publication number:
**WO 2024/136570 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **23.12.2022 KR 20220183765**

(71) Applicant: **LG Energy Solution, Ltd.**
**Seoul 07335 (KR)**

(72) Inventors:
• **KIM, Dohyeun**
**Daejeon 34122 (KR)**
• **KIM, Donghyuk**
**Daejeon 34122 (KR)**
• **LEE, Yong Ju**
**Daejeon 34122 (KR)**
• **JUN, Hyunmin**
**Daejeon 34122 (KR)**

(74) Representative: **Hoffmann Eitle**
**Patent- und Rechtsanwälte PartmbB**
**Arabellastraße 30**
**81925 München (DE)**

(54) **ANODE COMPOSITION, ANODE FOR LITHIUM SECONDARY BATTERY COMPRISING SAME, AND LITHIUM SECONDARY BATTERY COMPRISING ANODE**

(57)    The present application relates to a negative electrode composition, a negative electrode for a lithium secondary battery including the same, and a lithium secondary battery including the negative electrode.

[Figure 1]

EP 4 542 681 A1

## Description

[Technical Field]

This application claims priority to and the benefit of Korean Patent Application No. 10-2022-0183765 filed in the Korean Intellectual Property Office on December 16, 2022, the entire contents of which are incorporated herein by reference.

The present application relates to a negative electrode composition, a negative electrode for a lithium secondary battery including the same, and a lithium secondary battery including the negative electrode.

[Background Art]

Demands for the use of alternative energy or clean energy are increasing due to the rapid increase in the use of fossil fuels, and as a part of this trend, the most actively studied field is a field of electricity generation and electricity storage using an electrochemical reaction.

Currently, representative examples of an electrochemical device using such electrochemical energy include a secondary battery, and the usage areas thereof are increasing more and more.

As technology development of and demand for mobile devices have increased, demands for secondary batteries as an energy source have been rapidly increased. Among such secondary batteries, lithium secondary batteries having high energy density and voltage, long cycle life, and low self-discharge rate have been commercialized and widely used. Further, as an electrode for such a high capacity lithium secondary battery, studies have been actively conducted on a method for preparing a high-density electrode having a higher energy density per unit volume.

In general, a secondary battery is composed of a positive electrode, a negative electrode, an electrolyte, and a separator. The negative electrode includes a negative electrode active material for intercalating and de-intercalating lithium ions from the positive electrode, and as the negative electrode active material, a silicon-based particle having high discharge capacity may be used.

In particular, recently, in response to the demand for a high-density energy battery, studies have been actively conducted on a method for increasing the capacity by together using a silicon-based compound such as Si/C or $SiO_x$, which has a 10-fold higher capacity than a graphite-based material, as a negative electrode active material. A silicon-based compound, which is a high-capacity material, has a large capacity compared to graphite that is currently used, but has a problem in that the volume expands rapidly during the charging process to disconnect the conductive path, thereby degrading the battery characteristics.

Thus, to solve problems when the silicon-based compound is used as a negative electrode active material, measures to adjust the driving potential, additionally, measures to suppress the volume expansion itself such as methods of further coating the active material layer with a thin film and methods of adjusting the particle diameter of the silicon-based compound, various measures to prevent the conductive path from being disconnected, and the like have been discussed, but there is a limitation in the application of the measures because the performance of a battery may rather deteriorate, so that there is still a limitation in the commercialization of preparation of a battery having a negative electrode with a high content of the silicon-based compound.

That is, a negative electrode using a silicon-based active material needs to secure service life stability, and changes in the volume of the silicon-based active material occur due to intercalation and de-intercalation of lithium during the reaction between lithium and silicon during charging/discharging, and the degree of cracking of the active material also becomes severe during the intercalation and de-intercalation reaction of a large amount of lithium.

There is a need for related research such as the limitation of the SOC of a silicon-based active material in order to secure service life characteristics by improving the cracking phenomenon of the silicon-based active material as described.

<Related Art Document>

(Patent Document 1) Japanese Patent Application Laid-Open No. 2009-080971

[Detailed Description of the Invention]

[Technical Problem]

It has been found that when a highly reactive metal composite is included in a negative electrode composition while lithium ions react at a higher potential than silicon during the discharging of a cell rather than adjusting the SOC of a silicon-based negative electrode system itself, it is effective for improving the service life performance as the SOC of the silicon-based active material itself is limited.

Accordingly, the present application relates to a negative electrode composition, a negative electrode for a lithium secondary battery including the same, and a lithium secondary battery including the negative electrode.

[Technical Solution]

An exemplary embodiment of the present specification provides a negative electrode composition including: a silicon-based active material; a negative electrode conductive material; and a negative electrode binder, in which the negative electrode composition includes a metal composite on which lithium oxide is deposited, the weight ratio of metal to lithium oxide in the metal composite satisfies 10:1 or more and 800:1 or less, and the metal composite is included in an amount of 1 part by weight or more and 15 parts by weight or less based on 100 parts by weight of the negative electrode composition.

Another exemplary embodiment provides a negative electrode for a lithium secondary battery, including: a negative electrode current collector layer; and a negative electrode active material layer provided on one surface or both surfaces of the negative electrode current collector layer, in which the negative electrode active material layer includes the negative electrode composition according to the present application or a cured product thereof.

Finally, provided is a lithium secondary battery including: a positive electrode; the negative electrode for a lithium secondary battery according to the present application; a separator provided between the positive electrode and the negative electrode; and an electrolyte.

[Advantageous Effects]

The negative electrode composition according to an exemplary embodiment of the present invention is characterized in that in using a silicon-based active material which is a high-capacity material in order to manufacture a high-capacity battery, problems caused by the volume expansion of the silicon-based active material are ameliorated by including a specific metal composite in the negative electrode composition rather than limiting the SOC in the battery system.

In particular, the metal composite is characterized in that a weight ratio of metal to lithium oxide in the metal composite satisfies 10:1 or more and 800:1 or less, and the metal composite is present in an amount of 1 part by weight or more and 15 parts by weight or less based on 100 parts by weight of the negative electrode composition.

As the SOC of silicon itself is limited using a metal composite as described above compared to when a silicon-based active material is used alone, an effect of improving the service life performance is exhibited. That is, the metal composite has the aforementioned characteristics, and thus reacts with lithium at a higher potential than that of the silicon-based active material, and has excellent reactivity, and thus may suppress the volume expansion of the silicon-based active material during charging and discharging compared to when the silicon-based active material is used alone, so that the metal composite has a characteristic in that the effect of improving the service life performance is excellent.

In addition, compared to the case where a metal oxide is simply used, when a metal composite on which lithium oxide is deposited is included as in the present invention, lithium ions are uniformly distributed at the upper and lower ends of the electrode when an initial electrochemical reaction is performed, so that through an effect that it is possible to add lithium ions more uniformly, an effect of ameliorating the tortuosity in the electrode can be exhibited.

That is, a main object of the present invention is that the negative electrode composition according to the present application can obtain a negative electrode with high capacity and high density by having a high content of silicon-based active material particles, and simultaneously, in order to solve problems such as volume expansion caused by having a high content of silicon-based active material particles, a metal composite with a specific composition and content is used.

[Brief Description of Drawings]

FIG. 1 is a view illustrating the stacking structure of a negative electrode for a lithium secondary battery according to an exemplary embodiment of the present application.

FIG. 2 is a view illustrating the stacking structure of a negative electrode for a lithium secondary battery according to an exemplary embodiment of the present application.

FIG. 3 is a view illustrating the stacking structure of a lithium secondary battery according to an exemplary embodiment of the present application.

<Explanation of Reference Numerals and Symbols>

10: Negative electrode current collector layer
20: Negative electrode active material layer
30: Separator
40: Positive electrode active material layer
50: Positive electrode current collector layer
100: Negative electrode for lithium secondary battery
200: Positive electrode for lithium secondary battery

[Best Mode]

Prior to the description of the present invention, some terms will be first defined.

When one part "includes" one constituent element in the present specification, unless otherwise specifically described, this does not mean that another constituent element is excluded, but means that another constituent element may be further included.

In the present specification, 'p to q' means a range of 'p or more and q or less'.

In the present specification, "specific surface area" is measured by the BET method, and is specifically calculated from an amount of nitrogen gas adsorbed under liquid nitrogen temperature (77K) using BELSORP-mino II manufactured by BEL Japan, Inc. That is, in the present application, the BET specific surface area may mean a specific surface area measured by the measurement method.

In the present specification, "Dn" means the particle size distribution, and means the particle diameter at the n% point of the cumulative distribution of the number of particles according to the particle diameter. That is, D50 is the particle diameter (average particle diameter) at the 50% point of the cumulative distribution of the number of particles according to the particle diameter, D90 is the particle diameter at the 90% point of the cumulative distribution of the number of particles according to the particle diameter, and D10 is the particle diameter at the 10% point of the cumulative distribution of the number of particles according to the particle diameter. Meanwhile, the particle size distribution may be measured using a laser diffraction method. Specifically, after a powder to be measured is dispersed in a dispersion medium, a particle size distribution is calculated by introducing the resulting dispersion into a commercially available laser diffraction particle size measurement device (for example, Microtrac S3500) to measure the difference in diffraction pattern according to the particle size when particles pass through the laser beam.

In the present specification, the fact that a polymer includes a monomer as a monomer unit means that the monomer participates in a polymerization reaction, and thus is included as a repeating unit in the polymer. In the present specification, when the polymer includes a monomer, it is interpreted to be the same as when the polymer includes a monomer as a monomer unit.

In the present specification, the 'polymer' is understood to be used in a broad sense, including a copolymer, unless otherwise specified as a 'homopolymer'.

In the present specification, a weight average molecular weight (Mw) and a number average molecular weight (Mn) are polystyrene-conversion molecular weights measured by gel permeation chromatography (GPC) using a monodisperse polystyrene polymer (standard sample) with various degrees of polymerization commercially available for the measurement of the molecular weight as a standard material. In the present specification, the molecular weight means a weight average molecular weight unless otherwise described.

Hereinafter, the present invention will be described in detail with reference to drawings, such that a person with ordinary skill in the art to which the present invention pertains can easily carry out the present invention. However, the present invention can be implemented in various different forms, and is not limited to the following description.

An exemplary embodiment of the present specification provides a negative electrode composition including: a silicon-based active material; a negative electrode conductive material; and a negative electrode binder, in which the negative electrode composition includes a metal composite on which lithium oxide is deposited, the weight ratio of metal to lithium oxide in the metal composite satisfies 10:1 or more and 800:1 or less, and the metal composite is included in an amount of 1 part by weight or more and 15 parts by weight or less based on 100 parts by weight of the negative electrode composition.

As the SOC of silicon itself is limited using a metal composite as described above compared to when a silicon-based active material is used alone, an effect of improving the service life performance is exhibited. That is, the metal composite has the aforementioned characteristics, and thus reacts with lithium at a higher potential than the silicon-based active material, and has excellent reactivity, and thus may suppress the volume expansion of the silicon-based active material during charging and discharging compared to when the silicon-based active materials is used alone, so that the metal composite has a characteristic in that the effect of improving the service life performance is excellent.

An exemplary embodiment of the present application includes a negative electrode composition in which the silicon-based active material includes one or more selected from the group consisting of $SiO_x$ (x=0), $SiO_x$ (0<x<2), SiC, and a Si alloy.

The active material of the present invention includes a silicon-based active material. The silicon-based active material may be SiOx, Si/C, and Si. $SiO_x$ may include a compound represented by $SiO_x$ (0≤x<2). Since $SiO_2$ does not react with lithium ions, and thus cannot store lithium, it is preferred that x is within the above range. The silicon-based active material may be Si/C composed of a composite of Si and C, or Si. Furthermore, two or more of the aforementioned silicon-based active materials may be used in mixture. The negative electrode active material may further include a carbon-based active material along with the above-described silicon-based active material. The carbon-based active material may contribute to improving the excellent cycle characteristics or battery service life performance of the negative electrode or secondary battery of the present invention.

In general, it is known that silicon-based active materials have a capacity 10-fold or higher than that of carbon-based active material, and accordingly, when a silicon-based active material is applied to a negative electrode, it is expected that it is possible to implement an electrode having a high level of energy density even with a small thickness.

An exemplary embodiment of the present application provides a negative electrode composition in which the silicon-based active material includes one or more selected from the group consisting of $SiO_x$ (x=0) and $SiO_x$ (0<x<2), and includes 70 parts by weight or more of the $SiO_x$ (x=0) based on 100 parts by weight of the silicon-based active material.

In another exemplary embodiment, the silicon-based active material may include the $SiO_x$ (x=0) in an amount of 70 parts by weight or more, preferably 80 parts by weight or more, and more preferably 90 parts by weight or more, and 100 parts by weight or less, preferably 99 parts by weight or less, and more preferably 95 parts by weight or less, based on 100 parts by weight of the silicon-based active material.

The silicon-based active material according to the present application includes the $SiO_x$ (x=0) in an amount of 70 parts by weight or more based on 100 parts by weight of the silicon-based active material, and the case of a silicon-based active material that uses $SiO_x$ (0<x<2)-based material as the main material has a disadvantage in that the theoretical capacity is far inferior to that of the silicon-based active material of the present application. That is, when an $SiO_x$ (0<x<2)-based active material is used, conditions equivalent to the charge and discharge capacities cannot be implemented compared to the case of having the silicon-based active material of the present invention no matter what treatment is applied to the active material itself.

In an exemplary embodiment of the present application, for the silicon-based active material, pure silicon (Si) may be used as the silicon-based active material. The use of pure silicon (Si) as the silicon-based active material may mean that based on the total 100 parts by weight of the silicon-based active material as described above, pure Si particles ($SiO_x$ (x=0)), which are not bound to other particles or elements, are included in the above range.

Since the silicon-based active material has a remarkably high capacity compared to a graphite-based active material used in the related art, attempts to apply the silicon-based active material are increasing, but the attempt is limited to a case where a small amount of the silicon-based active material is mixed with the graphite-based active material and used, and the like because the silicon-based active material has a high volume expansion rate in the charging and discharging process.

Therefore, the present invention is characterized by using a metal composite under specific conditions in order to solve the problems of maintaining conductive paths due to volume expansion as described above and maintaining the bond among a conductive material, a binder, and an active material, while using a high content of the silicon-based active material as a negative electrode active material in order to improve capacity performance.

Meanwhile, the silicon-based active material of the present invention may have an average particle diameter (D50) of 5 $\mu$m to 10 $\mu$m, specifically 5.5 $\mu$m to 8 $\mu$m, and more specifically 6 $\mu$m to 7 $\mu$m. When the average particle diameter is included in the above range, the viscosity of a negative electrode slurry is formed in a suitable range because the specific surface area of the particle is included in a suitable range. Accordingly, the dispersion of the particles constituting the negative electrode slurry is facilitated. Furthermore, the size of a silicon-based active material has a value equal to or more than the lower limit value range, and since a composite composed of a conductive material and a binder in the negative electrode slurry makes a contact area between silicon particles and conductive materials excellent, the possibility that the conductive network lasts is increased, so that the capacity retention rate is increased. Meanwhile, when the average particle diameter satisfies the above range, excessively large silicon particles are eliminated to form a smooth surface of the negative electrode, and accordingly, it is possible to prevent the phenomenon of the non-uniform current density during charging and discharging.

In an exemplary embodiment of the present application, the silicon-based active material generally has a characteristic BET surface area. The BET surface area of the silicon-based active material is preferably 0.01 $m^2/g$ to 150.0 $m^2/g$, more preferably 0.1 $m^2/g$ to 100.0 $m^2/g$, particularly preferably 0.2 $m^2/g$ to 80.0 $m^2/g$, and most preferably 0.2 $m^2/g$ to 18.0 $m^2/g$. The BET surface area is measured by DIN 66131 (using nitrogen).

In an exemplary embodiment of the present application, the silicon-based active material may be present, for example, in a crystalline or amorphous form, and preferably is not porous. The silicon particles are preferably spherical or fragment-shaped particles. Alternatively but less preferably, the silicon particles may also have a fibrous structure or be present in the form of a film or coating including silicon.

In an exemplary embodiment of the present application, provided is a negative electrode composition in which the silicon-based active material is present in an amount of 60 parts by weight or more based on 100 parts by weight of the negative electrode composition.

In another exemplary embodiment, the silicon-based active material may be included in an amount of 60 parts by weight or more, preferably 65 parts by weight or more, and more preferably 70 parts by weight or more, and may be included in an amount of 95 parts by weight or less, preferably 90 parts by weight or less, and more preferably 85 parts by weight or less, based on 100 parts by weight of the negative electrode composition.

The negative electrode composition according to the present application has a feature in which by using a specific metal composite, which can suppress the volume expansion rate in the charging and discharging process even though a silicon-based active material having a remarkably high capacity is used in the above range, the performance of the negative electrode does not deteriorate and output characteristics at charging and discharging are excellent even though the above range is included.

In an exemplary embodiment of the present application, the silicon-based active material may have a non-circular form, and the circularity thereof is, for example, 0.9 or less, for example 0.7 to 0.9, for example, 0.8 to 0.9, and for example, 0.85 to 0.9.

In the present application, the circularity is determined by the following Equation 1-1, where A is the area and P is the boundary line.

$$[\text{Equation } 1\text{-}1]$$

$$4\pi A/P^2$$

In an exemplary embodiment of the present application, the negative electrode composition may include a metal composite on which lithium oxide is deposited.

The metal composite on which lithium oxide is deposited is used in a different concept from existing metal oxides. That is, a metal oxide may be represented by $MO_2$ (M is metal), and the metal composite on which lithium oxide is deposited according to the present application may have a structure in which lithium oxide is deposited on the metal itself. When a metal oxide (or metal) is used in the negative electrode, lithium ions need to enter from the top to the bottom of the electrode during the first discharging, so that a relative imbalance between the upper and lower portions of the electrode occurs, and accordingly, the service life performance deteriorates. However, lithium oxide may be uniformly mixed in the metal composite on which lithium oxide is deposited according to the present application, so that when the initial electrochemical reaction occurs, lithium ions are distributed throughout the upper and lower ends of the electrode, allowing the lithium ions to be more uniformly introduced, and accordingly, an effect of ameliorating tortuosity may be exhibited.

In an exemplary embodiment of the present application, the weight ratio of metal to lithium oxide in the metal composite may satisfy 10:1 or more and 800:1 or less.

In another exemplary embodiment, the weight ratio of metal to lithium oxide in the metal composite may be 10:1 or more and 800:1 or less, preferably 15:1 or more and 700:1 or less, and more preferably 20:1 or more and 600:1 or less.

The metal composite according to the present application corresponds to a material used to limit the SOC of a silicon-based active material. In the case of the metal composite according to the present application, lithium oxide may be deposited on the surface of the metal. In particular, the metal composite according to the present application satisfies the ratio of lithium oxide and metal with the aforementioned ratio, and reacts with lithium at a higher potential than the silicon-based active material, and has excellent reactivity, and thus may suppress the volume expansion of the silicon-based active material during charging and discharging compared to when the silicon-based active materials is used alone, so that the metal composite has a characteristic in that the effect of improving the service life performance is excellent.

That is, when the ratio of lithium oxide in the metal composite is low, there may be a problem in that the metal composite cannot react uniformly with Li in the metal during the reaction, and when the ratio of lithium oxide exceeds the above range, even though these materials react, these materials may remain, causing an increase in resistance to lead to a deterioration in cell performance.

An exemplary embodiment of the present application provides a negative electrode composition including the metal composite in an amount of 1 part by weight or more and 15 parts by weight or less based on 100 parts by weight of the negative electrode composition.

In another exemplary embodiment, the metal composite may be included in an amount of 1 part by weight or more and 15 parts by weight or less, preferably 2 parts by weight or more and 14 parts by weight or less, and more preferably 3 parts by weight or more and 13.5 part by weight or less, based on 100 parts by weight of the negative electrode composition.

An exemplary embodiment of the present application provides a negative electrode composition in which the weight ratio of the metal composite:the silicon-based active material in the negative electrode composition satisfies 1:5 to 1:20.

The negative electrode composition according to the present application is characterized by using a silicon-based active material and simultaneously including the aforementioned metal composite, and is characterized by satisfying the aforementioned weight ratio. When the aforementioned weight ratio is included, the content of the silicon-based active material itself does not decrease, so that it is possible to exhibit high energy density and high capacity, and simultaneously, the metal composite is included in a suitable content so as to limit the SOC, and thus has a feature in which it is also possible to improve service life characteristics.

That is, when the content of the metal composite is less than the above range, it is impossible to alleviate the Si cracking phenomenon as the extent to which the SOC of Si is limited becomes small, and when the content of the metal composite exceeds the above range, an increase in electrode resistance due to an increase in the total loading amount in the negative electrode may occur as the discharge capacity of Sn compared to Si decreases.

In an exemplary embodiment of the present application, the metal may be Sn.

In an exemplary embodiment of the present application, as the lithium oxide, any lithium oxide can be used without any limitation as long as it is a lithium oxide used in the art, but $Li_2O$ may be used.

In an exemplary embodiment of the present application, the lithium oxide may be included in an amount of 5 parts by weight or less, preferably 3 parts by weight or less, and more preferably 1 part by weight or less, based on 100 parts by weight of the negative electrode composition.

An exemplary embodiment of the present application provides a negative electrode composition in which the lithium oxide has a D50 particle diameter of 200 nm or less.

In another exemplary embodiment, the D50 particle diameter of the lithium oxide may be 200 nm or less, preferably 150 nm or less, and specifically may satisfy a range of 10 nm or more and 30 nm or less.

Lithium oxide is deposited on the metal surface, and when the above particle diameter range is satisfied, the deposition power on the metal surface may be improved, and the lithium oxide also has a characteristic in that the degree of dispersion is suitable.

In the related art, it was common to use only a graphite-based compound as a negative electrode active material, but recently, as the demand for a high-capacity battery has increased, attempts to mix and use a silicon-based compound have been increased in order to increase the capacity. However, in the case of the silicon-based compound, even though characteristics of the silicon-based active material itself are adjusted according to the present application as described above, the volume rapidly expands in the process of charging and discharging, so that a problem in that a conductive path formed in the negative electrode active material layer is impaired may occur in some cases.

Therefore, in an exemplary embodiment of the present application, the negative electrode conductive material may include one or more selected from the group consisting of a dotted conductive material, a planar conductive material, and a linear conductive material.

In an exemplary embodiment of the present application, the dotted conductive material may be used to enhance the conductivity of the negative electrode, and means a dot or sphere-shaped conductive material having conductivity without inducing a chemical change. Specifically, the dotted conductive material may be at least one selected from the group consisting of natural graphite, artificial graphite, carbon black, acetylene black, Ketjen black, channel black, furnace black, lamp black, thermal black, a conductive fiber, fluorocarbon, an aluminum powder, a nickel powder, zinc oxide, potassium titanate, titanium oxide and a polyphenylene derivative, and may preferably include carbon black in terms of implementing high conductivity and being excellent in dispersibility.

In an exemplary embodiment of the present application, the dotted conductive material may have a BET specific surface area of 40 $m^2$/g or more and 70 $m^2$/g or less, preferably 45 $m^2$/g or more and 65 $m^2$/g or less, and more preferably 50 $m^2$/g or more and 60 $m^2$/g or less.

In an exemplary embodiment of the present application, the functional group content (volatile matter) of the dotted conductive material may satisfy 0.01% or more and 1% or less, preferably 0.01% or more and 0.3% or less, and more preferably 0.01% or more and 0.1% or less.

In particular, when the functional group content of the dotted conductive material satisfies the above range, a functional group present on the surface of the dotted conductive material is present, so that when water is used as a solvent, the dotted conductive material may be smoothly dispersed in the solvent. In particular, in the present invention, as silicon particles and a specific binder are used, it is possible to reduce the functional group content of the dotted conductive material, and accordingly, the present invention has an effect excellent in improving dispersibility.

In an exemplary embodiment of the present application, it is characterized in that the dotted conductive material having a functional group content in the above range is included along with the silicon-based active material, and the functional group content may be adjusted according to the degree to which the dotted conductive material is heat-treated.

In an exemplary embodiment of the present application, the dotted conductive material may have a particle diameter of 10 nm to 100 nm, preferably 20 nm to 90 nm, and more preferably 20 nm to 60 nm.

In an exemplary embodiment of the present application, the negative electrode conductive material may include a planar conductive material.

The planar conductive material may serve to improve conductivity by increasing the surface contact between silicon particles in the negative electrode and simultaneously suppress the disconnection of the conductive path due to the volume expansion. The planar conductive material may be expressed as a plate-like conductive material or a bulk conductive material.

In an exemplary embodiment of the present application, the planar conductive material may be provided in the form of being bonded to the surface of the silicon-based particles. Specifically, the planar conductive material may be provided in such a manner that an -OH group or an -O group on the surface of the silicon-based particles and the hydrophilic group of the planar conductive material are bonded to each other.

In an exemplary embodiment of the present application, the planar conductive material may include at least one selected from the group consisting of plate-like graphite, graphene, graphene oxide, and graphite flake, and may be preferably plate-like graphite.

In an exemplary embodiment of the present application, the planar conductive material may have an average particle diameter (D50) of 2 $\mu$m to 7 $\mu$m, specifically 3 $\mu$m to 6 $\mu$m, and more specifically 3.5 $\mu$m to 5 $\mu$m. When the average particle diameter satisfies the above range, sufficient particle size facilitates dispersion without causing an excessive increase in viscosity of the negative electrode slurry. Therefore, the dispersion effect is excellent when particles are dispersed using the same equipment and time.

In an exemplary embodiment of the present application, provided is a negative electrode composition in which the planar conductive material has a D10 of 0.5 $\mu$m or more and 2.0 $\mu$m or less, a D50 of 2.5 $\mu$m or more and 3.5 $\mu$m or less, and a D90 of 6.5 $\mu$m or more and 15.0 $\mu$m or less.

In an exemplary embodiment of the present application, as the planar conductive material, it is possible to use a high specific surface area planar conductive material having a high BET specific surface area; or a low specific surface area planar conductive material.

In an exemplary embodiment of the present application, as the planar conductive material, a high specific surface area planar conductive material; or a low specific surface area planar conductive material may be used without limitation, but in particular, the planar conductive material according to the present application may be affected by the dispersion effect to some extent in the electrode performance, so that it may be particularly desirable to use a low specific surface area planar conductive material that does not cause a problem in dispersion.

In an exemplary embodiment of the present application, the planar conductive material may have a BET specific surface area of 1m$^2$/g or more.

In another exemplary embodiment, the planar conductive material may have a BET specific surface area of 1m$^2$/g or more and 500 m$^2$/g or less, preferably 5m$^2$/g or more and 300m$^2$/g or less, and more preferably 5m$^2$/g or more and 250m$^2$/g or less.

As the planar conductive material according to the present application, it is possible to use a high specific surface area planar conductive material; or a low specific surface area planar conductive material.

In still another exemplary embodiment, the planar conductive material is a high specific surface area planar conductive material, and the BET specific surface area may satisfy a range of 50 m$^2$/g or more and 500 m$^2$/g or less, preferably 80 m$^2$/g or more and 300 m$^2$/g or less, and more preferably 100 m$^2$/g or more and 300 m$^2$/g or less.

In yet another exemplary embodiment, the planar conductive material is a low specific surface area planar conductive material, and the BET specific surface area may satisfy a range of 1 m$^2$/g or more and 40 m$^2$/g or less, preferably 5 m$^2$/g or more and 30 m$^2$/g or less, and more preferably 5 m$^2$/g or more and 25 m$^2$/g or less.

As other conductive materials, there may be a linear conductive material such as carbon nanotubes. The carbon nanotubes may be bundle type carbon nanotubes. The bundle type carbon nanotubes may include a plurality of carbon nanotube units. Specifically, the term "bundle type' used herein, unless otherwise specified, refers to a secondary shape in the form of a bundle or rope in which the plurality of carbon nanotube units is aligned side by side in an alignment where longitudinal axes of the carbon nanotube units are substantially the same or intertwined. In the carbon nanotube unit, a graphite sheet has a cylindrical shape with a nano-sized diameter and has an sp2 bond structure. In this case, the carbon nanotube unit may exhibit characteristics of a conductor or semiconductor depending on a structure and an angle at which the graphite sheet is rolled. The bundle type carbon nanotubes may be uniformly dispersed during the preparation of a negative electrode compared to entangled type carbon nanotubes, and the conductivity of the negative electrode may be improved by smoothly forming a conductive network in the negative electrode.

Illustratively, the linear conductive material may be single-walled carbon nanotubes (SWCNTs) having a large BET specific surface area, linear morphology, a very small diameter, and a very long length. A linear conductive material such as SWCNTs cannot be stretched through dispersion and has a strong ability to return to its original shape while being dried. As a result, a linear conductive material such as SWCNTs has a strong strength to return to its original shape when dried, so that it is generally present in the form of wrapping or connecting the negative electrode active material or secondary aggregates. As the conjugation method, the linear conductive material may be adsorbed by van der Waals force.

In an exemplary embodiment of the present application, provided is a negative electrode composition, in which the negative electrode conductive material is included in an amount of 10 parts by weight or more and 40 parts by weight or less, based on 100 parts by weight of the negative electrode composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 25 parts by weight or less, based on 100 parts by weight of the negative electrode composition.

In an exemplary embodiment of the present application, provided is a negative electrode composition in which the negative electrode conductive material includes a planar conductive material; and a linear conductive material.

In an exemplary embodiment of the present application, provided is a negative electrode composition in which the negative electrode conductive material includes the planar conductive material; and the linear conductive material in amounts of 80 parts by weight or more and 99.9 parts by weight or less and 0.1 parts by weight or more and 20 parts by weight or less, respectively, based on 100 parts by weight of the negative electrode conductive material.

In another exemplary embodiment, the negative electrode conductive material may include the planar conductive material in an amount of 80 parts by weight or more and 99.9 parts by weight or less, preferably 85 parts by weight or more and 99.9 parts by weight or less, and more preferably 95 parts by weight or more and 98 parts by weight or less, based on 100 parts by weight of the negative electrode conductive material.

In still another exemplary embodiment, the negative electrode conductive material may include the linear conductive material in an amount of 0.1 parts by weight or more and 20 parts by weight or less, preferably 0.1 part by weight or more and 15 parts by weight or less, and more preferably 2 parts by weight or more and 5 parts by weight or less, based on 100 parts by weight of the negative electrode conductive material.

In an exemplary embodiment of the present application, as the negative electrode conductive material includes a planar conductive material and a linear conductive material and the planar conductive material and the linear conductive material each satisfy the composition and ratio, the negative electrode conductive material has a feature in which output characteristics at a high C-rate are excellent and the amount of high-temperature gas generated is reduced because the service life characteristics of the existing lithium secondary battery are not greatly affected and points where the battery can be charged and discharged are increased particularly, when a planar conductive material and a linear conductive material are included.

The negative electrode conductive material according to the present application has a completely different configuration from a positive electrode conductive material applied to the positive electrode. That is, the negative electrode conductive material according to the present application serves to capture a contact point between silicon-based active materials in which the volume expansion of the electrode is very large due to charging and discharging, and the positive electrode conductive material serves to impart partial conductivity while playing a buffer role as a cushioning role when roll-pressed, and the configuration and role thereof are completely different from those of the negative electrode conductive material of the present invention.

Further, the negative electrode conductive material according to the present application is applied to a silicon-based active material, and has a completely different configuration from a conductive material applied to a graphite-based active material. That is, the conductive material used for the electrode having the graphite-based active material simply has small particles with respect to the active material, and thus has the characteristics of enhancing the output characteristics and imparting partial conductivity, and the configuration and role thereof are completely different from those of the negative electrode conductive material applied together with the silicon-based active material as in the present invention.

In an exemplary embodiment of the present application, the planar conductive material used as the above-described negative electrode conductive material has a structure and a role different from those of a carbon-based active material generally used as a negative electrode active material. Specifically, the carbon-based active material used as the negative electrode active material may be artificial graphite or natural graphite, and means a material that is processed into a spherical or dot shape and used in order to facilitate the storage and release of lithium ions.

In contrast, the planar conductive material used as the negative electrode conductive material is a material having a planar or plate-like shape, and may be expressed as plate-like graphite. That is, the planar conductive material is a material included to maintain the conductive path in the negative electrode active material layer, and means a material for securing a conductive path in a planar form in the negative electrode active material layer rather than a role of storing and releasing lithium.

That is, in the present application, the fact that plate-like graphite is used as a conductive material means that the plate-like graphite is processed into a planar or plate-like shape and used as a material that secures a conductive path rather than a role of storing or releasing lithium. In this case, the negative electrode active material included together has high capacity characteristics for lithium storage and release, and plays a role capable of storing and releasing all lithium ions transmitted from the positive electrode.

In contrast, in the present application, the fact that a carbon-based active material is used as an active material means that the carbon-based active material is processed into a dot or spherical shape and used as a material that serves to store or release lithium.

In an exemplary embodiment of the present application, the negative electrode binder may include at least one selected from the group consisting of a polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, tetrafluoroethylene, polyethylene, polypropylene, polyacrylic acid, an ethylene-propylene-diene monomer (EPDM), a sulfonated EPDM, styrene butadiene rubber (SBR), fluorine rubber, polyacrylic acid and a material in which the hydrogen thereof is substituted with Li, Na, Ca, or the like, and may also include various copolymers thereof.

The negative electrode binder according to an exemplary embodiment of the present application plays a role of supporting the active material and the conductive material in order to prevent the distortion and structural deformation of the negative electrode structure in the volume expansion and relaxation of the silicon-based active material, and when the above role is satisfied, all general binders can be applied, specifically, a water-based binder can be used, and more specifically, a PAM-based binder can be used.

In an exemplary embodiment of the present application, the negative electrode binder may be included in an amount of 30 parts by weight or less, preferably 25 or less, and more preferably 20 parts by weight or less, and may be included in an amount of 5 parts by weight or more and 10 parts by weight or more, based on 100 parts by weight of the negative electrode composition.

In an exemplary embodiment of the present application, provided is a negative electrode for a lithium secondary battery, including: a negative electrode current collector layer; and a negative electrode active material layer including the negative electrode composition according to the present application or a cured product thereof formed on one surface or both surfaces of the negative electrode current collector layer.

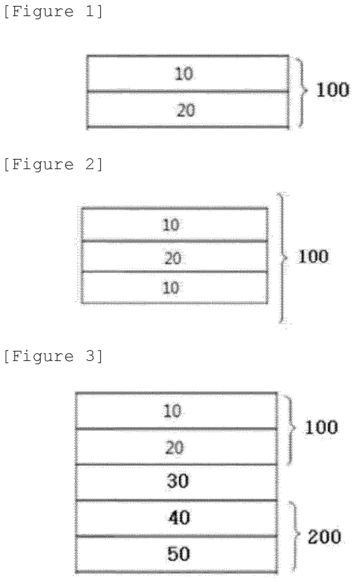

FIG. 1 is a view illustrating the stacking structure of a negative electrode for a lithium secondary battery according to an exemplary embodiment of the present application. Specifically, a negative electrode for a lithium secondary battery 100, which includes a negative electrode active material layer 20 on one surface of a negative electrode current collector layer 10, can be confirmed.

FIG. 2 according to another exemplary embodiment shows the stacked structure of a negative electrode for a lithium secondary battery, and specifically, a negative electrode for a lithium secondary battery 100, which includes a negative electrode active material layer 20 on both surfaces of a negative electrode current collector layer 10, can be confirmed.

As discussed above, there are two types: one in which one surface of the negative electrode current collector layer is coated with the negative electrode active material layer (see FIG. 1) and one in which both surfaces of the negative electrode current collector layer are coated with the negative electrode active material layer (see FIG. 2). In this case, the compositions of the negative electrode active material layers coated on both surfaces may be the same or different.

In an exemplary embodiment of the present application, when both surfaces are coated with the negative electrode active material layer, the negative electrode active material layer including the negative electrode composition according to the present application can be used without limitation as long as only one surface of both surfaces is coated with the negative electrode active material layer, and a silicon-based negative electrode active material or carbon-based negative electrode active material, which may be generally included, may be included in the other surface.

In an exemplary embodiment of the present application, for the negative electrode, a negative electrode for a lithium secondary battery may be formed by coating one surface or both surfaces of a current collector with a negative electrode slurry including the negative electrode composition.

In an exemplary embodiment of the present application, the negative electrode slurry may include: a negative electrode composition; and a slurry solvent. In an exemplary embodiment of the present application, a solid content of the negative electrode slurry may satisfy 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry may mean the content of the negative electrode composition contained in the negative electrode slurry, and may mean the content of the negative electrode composition based on 100 parts by weight of the negative electrode slurry.

When the solid content of the negative electrode slurry satisfies the above range, the present invention has a feature capable of efficiently forming a negative electrode active material layer by minimizing the particle aggregation phenomenon of the negative electrode composition because the viscosity is suitable during the formation of the negative electrode active material layer.

In an exemplary embodiment of the present application, the negative electrode current collector layer generally has a thickness of 1 $\mu$m to 100 $\mu$m. The negative electrode current collector layer is not particularly limited as long as the negative electrode current collector layer has high conductivity without causing a chemical change to the battery, and for example, it is possible to use copper, stainless steel, aluminum, nickel, titanium, fired carbon, a material in which the surface of copper or stainless steel is surface-treated with carbon, nickel, titanium, silver, and the like, an aluminum-cadmium alloy, and the like. In addition, the negative electrode current collector layer may also increase the bonding strength of a negative electrode active material by forming fine irregularities on the surface thereof, and the negative electrode current collector layer may be used in various forms such as a film, a sheet, a foil, a net, a porous body, a foam body, and a non-woven fabric body.

In an exemplary embodiment of the present application, provided is a negative electrode for a lithium secondary battery, in which the negative electrode current collector layer has a thickness of 1 $\mu$m or more and 100 $\mu$m or less, and the negative electrode active material layer has a thickness of 20 $\mu$m or more and 500 $\mu$m or less.

However, the thickness may be variously modified depending on the type and use of the negative electrode used, and is not limited thereto.

In an exemplary embodiment of the present application, the porosity of the negative electrode active material layer may satisfy a range of 10% or more and 60% or less.

In another exemplary embodiment, the porosity of the negative electrode active material layer may satisfy a range of 10% or more and 60% or less, preferably 20% or more and 50% or less, and more preferably 30% or more and 45% or less.

The porosity varies depending on the composition and content of the silicon-based active material; the conductive material; and the binder, which are included in the negative electrode active material layer, and in particular, as the silicon-based active material; and the conductive material according to the present application are included in a specific composition and content, the above range is satisfied, and accordingly, it is characterized in that electrical conductivity and resistance in the electrode have appropriate ranges.

In an exemplary embodiment of the present application, provided is a lithium secondary battery including: a positive electrode; the negative electrode for a lithium secondary battery according to the present application; a separator provided between the positive electrode and the negative electrode; and an electrolyte.

FIG. 3 is a view illustrating the stacking structure of a lithium secondary battery according to an exemplary embodiment of the present application. Specifically, it is possible to confirm a negative electrode 100 for a lithium secondary battery, which includes a negative electrode active material layer 20 on one surface of a negative electrode current collector layer 10 and to confirm a positive electrode 200 for a lithium secondary battery, which includes a positive electrode active material layer 40 on one surface of a positive electrode current collector layer 50, and it is shown that the negative electrode 100 for a lithium secondary battery and the positive electrode 200 for a lithium secondary battery are formed in a structure in which the electrodes are stacked with a separator 30 interposed therebetween. Further, the negative electrode active material layer 20 may be formed on both surfaces of the negative electrode current collector layer 10. In addition, the positive electrode active material layer 40 may be formed on both surfaces of the positive electrode current collector layer 50.

The secondary battery according to an exemplary embodiment of the present specification may particularly include the above-described negative electrode for a lithium secondary battery. Specifically, the secondary battery may include a negative electrode, a positive electrode, a separator interposed between the positive electrode and the negative electrode, and an electrolyte, and the negative electrode is the same as the above-described negative electrode. Since the negative electrode has been described in detail, a specific description thereof will be omitted.

The positive electrode may include a positive electrode current collector and a positive electrode active material layer formed on the positive electrode current collector and including the positive electrode active material.

In the positive electrode, the positive electrode current collector is not particularly limited as long as the positive electrode current collector has conductivity without causing a chemical change to the battery, and for example, it is possible to use stainless steel, aluminum, nickel, titanium, fired carbon, or a material in which the surface of aluminum or stainless steel is surface-treated with carbon, nickel, titanium, silver, and the like. Further, the positive electrode current collector may typically have a thickness of 3 $\mu$m to 500 $\mu$m, and the adhesion of the positive electrode active material may also be enhanced by forming fine irregularities on the surface of the current collector. For example, the positive electrode current collector may be used in various forms such as a film, a sheet, a foil, a net, a porous body, a foam body, and a non-woven fabric body.

The positive electrode active material may be a typically used positive electrode active material. Specifically, the positive electrode active material includes: a layered compound such as lithium cobalt oxide ($LiCoO_2$) and lithium nickel oxide ($LiNiO_2$) or a compound substituted with one or more transition metals; a lithium iron oxide such as $LiFe_3O_4$; a lithium manganese oxide such as chemical formula $Li_{1+c1}Mn_{2-c1}O_4$ ($0 \leq c1 \leq 0.33$), $LiMnO_3$, $LiMn_2O_3$, and $LiMnO_2$; a lithium copper oxide ($Li_2CuO_2$); a vanadium oxide such as $LiV_3O_8$, $V_2O_5$, and $Cu_2V_2O_7$; a Ni site type lithium nickel oxide expressed as chemical formula $LiNi_{1-c2}M_{c2}O_2$ (here, M is at least any one selected from the group consisting of Co, Mn, Al, Cu, Fe, Mg, B and Ga, and c2 satisfies $0.01 \leq c2 \leq 0.6$); a lithium manganese composite oxide expressed as chemical formula $LiMn_{2-}$

$_{c3}M_{c3}O_2$ (here, M is at least any one selected from the group consisting of Co, Ni, Fe, Cr, Zn and Ta, and c3 satisfies $0.01 \leq c3 \leq 0.6$) or $Li_2Mn_3MO_8$ (here, M is at least any one selected from the group consisting of Fe, Co, Ni, Cu and Zn.); $LiMn_2O_4$ in which Li of the chemical formula is partially substituted with an alkaline earth metal ion, and the like, but is not limited thereto. The positive electrode may be Li-metal.

In an exemplary embodiment of the present application, the positive electrode active material includes a lithium composite transition metal compound including nickel (Ni), cobalt (Co) and manganese (Mn), the lithium composite transition metal compound includes single particles or secondary particles, and the single particles may have an average particle diameter (D50) of 1 μm or more.

For example, the single particles may have an average particle diameter (D50) of 1 μm or more and 12 μm or less, 1 μm or more and 8 μm or less, 1 μm or more and 6 μm or less, more than 1 μm and 12 μm or less, more than 1 μm and 8 μm or less, or more than 1 μm and 6 μm or less.

Even though the single particles are formed as small particle diameters having an average particle diameter (D50) of 1 μm or more and 12 μm or less, the particle strength may be excellent. For example, the single particles may have a particle strength of 100 to 300 MPa when rolled with a force of 650 kgf/cm². As a result, even though the single particles are rolled with a strong force of 650 kgf/cm², a phenomenon in which the number of particulates in the electrode due to cracking of the particles is increased is alleviated, thereby improving the service life characteristics of the battery.

The single particles may be prepared by mixing a transition metal precursor and a lithium raw material and firing the resulting mixture. The secondary particles may be prepared by a different method than the single particles, and the composition thereof may be the same as or different from that of the single particles.

The method of forming the single particles is not particularly limited, but in general, single particles may be formed by increasing the firing temperature to achieve overfiring, and single particles may be prepared by a method of using an additive such as a grain growth promoter that helps overfiring or changing a starting material, and the like.

For example, the firing is performed at a temperature capable of forming single particles. In order to form the single particles, the firing needs to be performed at a temperature higher than that in the preparation of the secondary particles, and for example, when the composition of the precursor is the same, the firing needs to be performed at a temperature about 30°C to 100°C higher than that when the secondary particles are prepared. The firing temperature for forming the single particles may vary depending on the metal composition in the precursor, and for example, when a high-Ni NCM-based lithium composite transition metal oxide having a nickel (Ni) content of 80 mol% or more is desired to be formed as a single particle, the firing temperature may be 700°C to 1000°C, preferably approximately 800°C to 950°C. When the firing temperature satisfies the above range, a positive electrode active material including single particles with excellent electrochemical properties may be prepared. When the firing temperature is less than 790°C, a positive electrode active material including a lithium composite transition metal compound in the form of secondary particles may be prepared, and when the firing temperature exceeds 950°C, the firing may occur excessively, so that a layered crystal structure may not be properly formed, thereby degrading the electrochemical properties.

In the present specification, the single particle is a term used to distinguish single particles from secondary particles formed by aggregation of tens to hundreds of primary particles in the related art, and is a concept including the form of a single particle composed of one primary particle and a pseudo-single particle which is an aggregate of 30 or less primary particles.

Specifically, in the present invention, the single particle may be in the form of a single particle composed of one primary particle or a pseudo-single particle which is an aggregate of 30 or less primary particles, and secondary particles may be in the form of aggregation of several hundred primary particles.

In an exemplary embodiment of the present application, the lithium composite transition metal compound, which is the positive electrode active material, further includes secondary particles, and the average particle diameter (D50) of the single particles is smaller than the average particle diameter (D50) of the secondary particles.

In the present invention, the single particle may be in the form of a single particle composed of one primary particle or a pseudo-single particle which is an aggregate of 30 or less primary particles, and secondary particles may be in the form of aggregation of several hundred primary particles.

The above-described lithium composite transition metal compound may further include secondary particles. A secondary particle refers to a form formed by aggregation of primary particles, and may be distinguished from the concept of a single particle including the form of one primary particle, one single particle or a pseudo-single particle which is an aggregate of 30 or less primary particles.

The secondary particles may have a particle diameter (D50) of 1 μm to 20 μm, 2 μm to 17 μm, preferably 3 μm to 15 μm. The secondary particles may have a specific surface area (BET) of 0.05 m²/g to 10 m²/g, preferably 0.1 m²/g to 1 m²/g, and more preferably 0.3 m²/g to 0.8 m²/g.

In additional exemplary embodiments of the present application, the secondary particle is an aggregate of primary particles, and the primary particles have an average particle diameter (D50) of 0.5 μm to 3 μm. Specifically, the secondary particle may be in the form of aggregation of several hundred primary particles, and the primary particles may have an average particle diameter (D50) of 0.6 μm to 2.8 μm, 0.8 μm to 2.5 μm, or 0.8 μm to 1.5 μm.

When the average particle diameter (D50) of the primary particles satisfies the above range, a single particle positive electrode active material with excellent electrochemical properties may be formed. When the average particle diameter (D50) of the primary particles is too small, the number of aggregated primary particles forming the lithium-nickel-based oxide particles increases, so the effect of suppressing the occurrence of particle cracking during rolling is reduced, and when the average particle diameter (D50) of the primary particles is too large, the lithium diffusion path inside the primary particles becomes long, so the resistance increases and the output characteristics may deteriorate.

According to additional exemplary embodiments of the present application, the average particle diameter (D50) of the single particles is characterized by being smaller than the average particle diameter (D50) of the secondary particles. Therefore, even though the single particles are formed of small particle diameters, the single particles may have excellent particle strength, and the excellent particle strength may alleviate a phenomenon in which the number of particulates in the electrode due to cracking of the particles is increased, thereby improving the service life characteristics of the battery.

In an exemplary embodiment of the present application, the average particle diameter (D50) of the single particles is 1 μm to 18 μm smaller than the average particle diameter (D50) of the secondary particles.

For example, the average particle diameter (D50) of the single particles may be 1 μm to 16 μm smaller, 1.5 μm to 15 μm smaller, or 2 μm to 14 μm smaller than the average particle diameter (D50) of the secondary particles.

When the average particle diameter (D50) of the single particles is smaller than the average particle diameter (D50) of the secondary particles, for example, when the above range is satisfied, the single particles may have excellent particle strength even though formed with a small particle diameter, and thus, the excellent particle strength alleviates a phenomenon in which the number of particulates in the electrode due to cracking of the particles is increased, so that there is an effect of improving the service life characteristics of the battery and improving the energy density.

According to additional exemplary embodiments of the present application, the single particles are included in an amount of 15 parts by weight to 100 parts by weight based on 100 parts by weight of the positive electrode active material. The single particles may be included in an amount of 20 parts by weight to 100 parts by weight, or 30 parts by weight to 100 parts by weight based on 100 parts by weight of the positive electrode active material.

For example, the single particles may be included in an amount of 15 parts by weight or more, 20 parts by weight or more, 25 parts by weight or more, 30 parts by weight or more, 35 parts by weight or more, 40 parts by weight or more, or 45 parts by weight or more based on 100 parts by weight of the positive electrode active material. The single particles may be included in an amount of 100 parts by weight or less based on 100 parts by weight of the positive electrode active material.

When the single particles within the above range are included, excellent battery characteristics may be exhibited in combination with the above-described negative electrode material. In particular, when the amount of the single particles is 15 parts by weight or more, a phenomenon in which the number of particulates in the electrode due to particle cracking during the rolling process after manufacturing the electrode is increased may be alleviated, thereby improving the service life characteristics of the battery.

In an exemplary embodiment of the present application, the lithium composite transition metal compound may further include secondary particles, and the amount of the secondary particles may be 85 parts by weight or less based on 100 parts by weight of the positive electrode active material. The amount of the secondary particles may be 80 parts by weight or less, 75 parts by weight or less, or 70 parts by weight or less based on 100 parts by weight of the positive electrode active material. The amount of the secondary particles may be 0 part by weight or more based on 100 parts by weight of the positive electrode active material.

When the above range is satisfied, the above-described effect due to the presence of the positive electrode active material of single particles may be maximized. When the positive electrode active material of the secondary particles is included, the components may be the same as those exemplified as the above-described single particle positive electrode active material, may be different components, and may mean a form of aggregation of single particle forms.

In an exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

The positive electrode active material layer may include a positive electrode conductive material and a positive electrode binder together with the above-described positive electrode active material.

In this case, the positive electrode conductive material is used to impart conductivity to the electrode, and can be used without particular limitation as long as the positive electrode conductive material has electron conductivity without causing a chemical change to a battery to be constituted. Specific examples thereof include graphite such as natural graphite or artificial graphite; a carbon-based material such as carbon black, acetylene black, Ketjen black, channel black, furnace black, lamp black, thermal black, and carbon fiber; metal powder or metal fiber such as copper, nickel, aluminum, and silver; a conductive whisker such as zinc oxide and potassium titanate; a conductive metal oxide such as titanium oxide; or a conductive polymer such as a polyphenylene derivative, and any one thereof or a mixture of two or more thereof may be used.

Alternatively, the positive electrode binder serves to improve the bonding between positive electrode active material particles and the adhesion between the positive electrode active material and the positive electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, styrene-butadiene rubber (SBR), fluorine rubber, or various copolymers thereof, and any one thereof or a mixture of two or more thereof may be used.

The separator separates the negative electrode and the positive electrode and provides a passage for movement of lithium ions, and can be used without particular limitation as long as the separator is typically used as a separator in a secondary battery, and in particular, a separator having an excellent ability to retain moisture of an electrolyte as well as low resistance to ion movement in the electrolyte is preferable. Specifically, it is possible to use a porous polymer film, for example, a porous polymer film formed of a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof. In addition, a typical porous non-woven fabric, for example, a non-woven fabric made of a glass fiber having a high melting point, a polyethylene terephthalate fiber, and the like may also be used. Furthermore, a coated separator including a ceramic component or a polymeric material may be used to secure heat resistance or mechanical strength and may be selectively used as a single-layered or multi-layered structure.

Examples of the electrolyte include an organic liquid electrolyte, an inorganic liquid electrolyte, a solid polymer electrolyte, a gel-type polymer electrolyte, a solid inorganic electrolyte, a molten-type inorganic electrolyte, and the like, which can be used in the preparation of a lithium secondary battery, but are not limited thereto.

Specifically, the electrolyte may include a non-aqueous organic solvent and a metal salt.

As the non-aqueous organic solvent, it is possible to use, for example, an aprotic organic solvent, such as N-methyl-2-pyrrolidinone, propylene carbonate, ethylene carbonate, butylene carbonate, dimethyl carbonate, diethyl carbonate, $\gamma$-butyrolactone, 1,2-dimethoxy ethane, tetrahydrofuran, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

In particular, among the carbonate-based organic solvents, cyclic carbonates ethylene carbonate and propylene carbonate may be preferably used because the cyclic carbonates have high permittivity as organic solvents of a high viscosity and thus dissociate a lithium salt well, and such cyclic carbonates may be more preferably used since the cyclic carbonate may be mixed with a linear carbonate of a low viscosity and low permittivity such as dimethyl carbonate and diethyl carbonate in an appropriate ratio and used to prepare an electrolyte having a high electric conductivity.

As the metal salt, a lithium salt may be used, the lithium salt is a material which is easily dissolved in the non-aqueous electrolyte, and for example, as an anion of the lithium salt, it is possible to use one or more selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$.

In the electrolyte, for the purpose of improving the service life characteristics of a battery, suppressing the decrease in battery capacity, and improving the discharge capacity of the battery, one or more additives, such as, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride may be further included in addition to the above electrolyte constituent components.

An exemplary embodiment of the present invention provides a battery module including the secondary battery as a unit cell, and a battery pack including the same. The battery module and the battery pack include the secondary battery which has high capacity, high rate properties, and cycle properties, and thus, may be used as a power source of a medium-and-large sized device selected from the group consisting of an electric vehicle, a hybrid electric vehicle, a plug-in hybrid electric vehicle, and a power storage system.

[Mode for Invention]

Hereinafter, preferred embodiments will be suggested to facilitate understanding of the present invention, but the embodiments are only provided to illustrate the present invention, and it is apparent to those skilled in the art that various alterations and modifications are possible within the scope and technical spirit of the present invention, and it is natural that such alterations and modifications also fall within the accompanying claims.

**<Preparation Examples>**

**<Preparation of negative electrode composition>**

A negative electrode slurry was prepared by adding Si (average particle diameter (D50): 5 $\mu$m) as a silicon-based active material, a metal complex satisfying the composition and content in the following Table 1, a second conductive material, SWCNT as a linear conductive material, and polyacrylamide (PAM) as a binder at a weight ratio shown in the following Table 1 to distilled water as a solvent for forming a negative electrode slurry (solid concentration of 28 wt%).

In this case, the second conductive material, the SWCNT, and the binder were used in an amount of 9.685 parts by weight, 0.315 parts by weight, and 10 parts by weight, respectively, based on 100 parts by weight of the negative electrode slurry.

Specifically, the first conductive material was plate-like graphite (specific surface area: 17 m$^2$/g, average particle diameter (D50): 3.5 $\mu$m), and the second conductive material was SWCNT.

After the first conductive material, the second conductive material, the binder and water were dispersed at 2500 rpm for 30 minutes using a homo mixer as a specific mixing method, the silicon-based active material was added thereto, and then the resulting mixture was dispersed at 2500 rpm for 30 minutes to prepare a negative electrode slurry.

Both surfaces of a copper current collector (thickness: 8 $\mu$m) as a negative electrode current collector layer were coated with the negative electrode slurry in a loading amount of 85 mg/25cm$^2$, and the copper current collector was roll-pressed and dried in a vacuum oven at 130°C for 10 hours to form a negative electrode active material layer (thickness: 33 $\mu$m), which was employed as a negative electrode (thickness of the negative electrode: 41 $\mu$m, the porosity of the negative electrode 40.0%).

[Table 1]

| | | Weight ratio of Sn:Li$_2$O in metal composite | Weight ratio of metal composite : Si | Weight ratio of metal composite in negative electrode active material | Weight ratio of Li$_2$O in negative electrode active material |
|---|---|---|---|---|---|
| | Example 1 | 20:1 | 1:5 | 13.3 | 0.63 |
| | Example 2 | 100:1 | 1:5 | 13.3 | 0.13 |
| | Example 3 | 600:1 | 1:5 | 13.3 | 0.022 |
| | Example 4 | 20:1 | 1:10 AM | 7.27 | 0.346 |
| | Example 5 | 100:1 | 1:10 AM | 7.27 | 0.072 |
| | Example 6 | 600:1 | 1:10 AM | 7.27 | 0.012 |
| | Example 7 | 20:1 | 1:20 | 3.80 | 0.181 |
| | Example 8 | 100:1 | 1:20 | 3.80 | 0.037 |
| | Example 9 | 600:1 | 1:20 | 3.80 | 0.003 |
| Comparative Example 1 | | - | 0:100 | - | - |
| Comparative Example 2 | | 100:0 | 1:10 AM | - | - |
| Comparative Example 3 | | 10:1 | 1:10 AM | 7.27 | 1.26 |
| Comparative Example 4 | | 1000:1 | 1:10 AM | 7.27 | 0.002 |

**<Manufacture of secondary battery>**

A positive electrode slurry was prepared by adding LiNi$_{0.6}$Co$_{0.2}$Mn$_{0.2}$O$_2$ (average particle diameter (D50): 15 $\mu$m) as a positive electrode active material, carbon black (product name: Super C65, manufacturer: Timcal) as a conductive material, and polyvinylidene fluoride (PVdF) as a binder at a weight ratio of 97:1.5:1.5 to N-methyl-2-pyrrolidone (NMP) as a solvent for forming a positive electrode slurry (solid concentration of 78 wt%).

Both surfaces of an aluminum current collector (thickness: 12 $\mu$m) as a positive electrode current collector were coated with the positive electrode slurry in a loading amount of 537 mg/25 cm$^2$, and the aluminum current collector was roll-pressed and dried in a vacuum oven at 130°C for 10 hours to form a positive electrode active material layer (thickness: 65 $\mu$m), thereby preparing a positive electrode (thickness of the positive electrode: 77 $\mu$m, porosity of 26%).

A lithium secondary battery was prepared by interposing a polyethylene separator between the positive electrode and the negative electrode of each of the Examples and the Comparative Examples and injecting an electrolyte thereinto.

The electrolyte was obtained by adding 3 wt% of vinylene carbonate based on the total weight of the electrolyte to an organic solvent in which fluoroethylene carbonate (FEC) and diethyl carbonate (DMC) were mixed at a volume ratio of 10:90 and adding $LiPF_6$ as a lithium salt at a concentration of 1 M thereto.

**Experimental Example 1: Evaluation of service life of monocell**

The secondary batteries including the negative electrodes manufactured in the Examples and the Comparative Examples were subjected to service life evaluation using an electrochemical charger/discharger and the capacity retention rate was evaluated. The secondary batteries were subjected to in-situ cycle test at 4.2-3.0 V 1 C/0.5 C, the capacity retention rates were measured by charging/discharging the secondary batteries at 0.33 C/0.33 C (4.2-3.0 V) every 50 cycles during the test, and the results are shown in Table 2.

Service life retention rate (%) = {(Discharge capacity in the Nth cycle)/(Discharge capacity in the 1st cycle)} X 100

[Table 2]

|  | Monocell service life retention rate (1 C/0.5 CM, after 200 cycles) |
| --- | --- |
| Example 1 | 85.3 |
| Example 2 | 86.6 |
| Example 3 | 85.6 |
| Example 4 | 87.7 |
| Example 5 | 88.3 |
| Example 6 | 87.3 |
| Example 7 | 85.7 |
| Example 8 | 87.0 |
| Example 9 | 85.1 |
| Comparative Example 1 | 84.8 |
| Comparative Example 2 | 82.6 |
| Comparative Example 3 | 84.5 |
| Comparative Example 4 | 81.3 |

**Experimental Example 2: Evaluation of initial cycle @SOC50 2.5 C 0.1 s discharge resistance (electrode resistance measurement using monocell)**

After the capacity retention rates were measured by charging/discharging the secondary batteries at 0.33 C/0.33 C (4.2-3.0 V) every 50 cycles during the test in Experimental Example 1, during discharge to 2.5 C pulse in SOC50, the resistance value was measured for a certain period of time (0.1 s to 10 s), and the results are shown in the following Table 3.

[Table 3]

|  | Measurement of pulse test 0.1 s to 10 s resistance (mohm) |
| --- | --- |
| Example 1 | 483 |
| Example 2 | 481 |
| Example 3 | 484 |
| Example 4 | 475 |
| Example 5 | 473 |
| Example 6 | 477 |

(continued)

|  | Measurement of pulse test 0.1 s to 10 s resistance (mohm) |
|---|---|
| Example 7 | 485 |
| Example 8 | 486 |
| Example 9 | 488 |
| Comparative Example 1 | 490 |
| Comparative Example 2 | 510 |
| Comparative Example 3 | 495 |
| Comparative Example 4 | 530 |

As can be seen from Tables 1 to 3 above, it could be confirmed that when the metal composite according to the present application is used, the effect of improving the service life performance is shown as the SOC of silicon itself is limited compared to when a silicon-based active material is used alone (compared to Comparative Example 1). That is, the metal composite has the aforementioned characteristics, and thus reacts with lithium at a higher potential than the silicon-based active material, and has excellent reactivity, and thus may suppress the volume expansion of the silicon-based active material during charging and discharging compared to when the silicon-based active materials is used alone, so that it could be confirmed that the metal composite has a characteristic in that the effect of improving the service life performance is excellent.

Comparative Example 1 corresponds to a case where the metal composite according to the present application is not included, and Comparative Example 2 corresponds to a case where the metal composite according to the present application is not used, but the metal (Sn) is used alone. In addition, Comparative Example 3 corresponds to a case where the proportion of metal in the metal composite is small, and Comparative Example 4 corresponds to a case where the proportion of metal in the metal composite is high.

When Comparative Example 1 and Examples are compared, it could be confirmed that there was an effect of improving the service life performance and that the electrodes of the Examples maintained a low resistance. This corresponds to the result in which an effect of improving the service life performance is exhibited as the SOC of silicon itself is limited.

Furthermore, Comparative Example 2 is the case where a metal is used in the negative electrode, and it could be confirmed that a relative imbalance between the upper and lower portions of the electrode occurs, and accordingly, the service life performance deteriorates because lithium ions need to enter from the top to the bottom of the electrode during the first discharging. However, in the case of the Examples, lithium oxide may be uniformly mixed, so that it could be confirmed that when the initial electrochemical reaction occurs, lithium ions are distributed throughout the upper and lower ends of the electrode, allowing the lithium ions to be more uniformly introduced, and accordingly, an effect of ameliorating tortuosity may be exhibited.

In the case of Comparative Examples 3 and 4, the weight ratio of metal and lithium oxide in the metal oxide was adjusted, and it could be confirmed that the desired effect could not be achieved when the weight ratio exceeded or was less than the range according to the present application.

## Claims

1. A negative electrode composition comprising:

   a silicon-based active material;
   a negative electrode conductive material; and
   a negative electrode binder,
   wherein the negative electrode composition comprises a metal composite on which lithium oxide is deposited, the weight ratio of metal to lithium oxide in the metal composite satisfies 10:1 or more and 800:1 or less, and the metal composite is comprised in an amount of 1 part by weight or more and 15 parts by weight or less based on 100 parts by weight of the negative electrode composition.

2. The negative electrode composition of claim 1, wherein the silicon-based active material is comprised in an amount of 60 parts by weight or more based on 100 parts by weight of the negative electrode composition.

3. The negative electrode composition of claim 1, wherein the silicon-based active material comprises one or more selected from the group consisting of $SiO_x$, wherein x=0, $SiO_x$, wherein 0<x<2, SiC, and a Si alloy.

4. The negative electrode composition of claim 1, wherein the silicon-based active material comprises one or more selected from the group consisting of $SiO_x$, wherein x=0, and $SiO_x$, wherein 0<x<2, and comprises 70 parts by weight or more of the $SiO_x$, wherein x=0, based on 100 parts by weight of the silicon-based active material.

5. The negative electrode composition of claim 1, wherein the lithium oxide has a D50 particle diameter of 200 nm or less.

6. The negative electrode composition of claim 1, wherein the weight ratio of the metal composite:the silicon-based active material in the negative electrode composition satisfies 1:5 to 1:20.

7. The negative electrode composition of claim 1, wherein the negative electrode conductive material is comprised in an amount of 10 parts by weight or more and 40 parts by weight or less, based on 100 parts by weight of the negative electrode composition.

8. The negative electrode composition of claim 1, wherein the negative electrode conductive material comprises a planar conductive material; and a linear conductive material.

9. The negative electrode composition of claim 8, wherein the negative electrode conductive material comprises the planar conductive material and the linear conductive material in an amount of 80 parts by weight or more and 99.9 parts by weight or less; and 0.1 parts by weight or more and 20 parts by weight or less, respectively, based on 100 parts by weight of the negative electrode conductive material.

10. The negative electrode composition of claim 1, wherein the negative electrode binder is comprised in an amount of 5 parts by weight or more and 30 parts by weight or less, based on 100 parts by weight of the negative electrode composition.

11. A negative electrode for a lithium secondary battery, comprising:

> a negative electrode current collector layer; and
> a negative electrode active material layer provided on one surface or both surfaces of the negative electrode current collector layer,
> wherein the negative electrode active material layer comprises the negative electrode composition of any one of claims 1 to 10 or a cured product thereof.

12. The negative electrode of claim 11, wherein the negative electrode current collector layer has a thickness of 1 $\mu$m or more and 100 $\mu$m or less, and
the negative electrode active material layer has a thickness of 5 $\mu$m or more and 500 $\mu$m or less.

13. A lithium secondary battery comprising:

> a positive electrode;
> the negative electrode for a lithium secondary battery according to claim 11;
> a separator provided between the positive electrode and the negative electrode; and
> an electrolyte.

[Figure 1]

[Figure 2]

[Figure 3]

## INTERNATIONAL SEARCH REPORT

| International application No. |
| --- |
| **PCT/KR2023/021388** |

**A.    CLASSIFICATION OF SUBJECT MATTER**

**H01M 4/38**(2006.01)i; **H01M 4/48**(2010.01)i; **H01M 4/587**(2010.01)i; **H01M 4/134**(2010.01)i; **H01M 4/62**(2006.01)i; **H01M 10/0525**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/38(2006.01); H01M 10/0525(2010.01); H01M 4/02(2006.01); H01M 4/36(2006.01); H01M 4/48(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 음극 활물질(anode active material), 실리콘(silicon), 리튬 산화물(lithium oxide), 금속 복합체(metal composite), 증착(deposition)

**C.    DOCUMENTS CONSIDERED TO BE RELEVANT**

| Category* | Citation of document, with indication, where appropriate, of the relevant passages | Relevant to claim No. |
| --- | --- | --- |
| Y | KR 10-2014-0089643 A (SAMSUNG ELECTRONICS CO., LTD.) 16 July 2014 (2014-07-16)<br>See claims 1, 6, 8 and 10; and paragraphs [0025], [0026], [0048]-[0050], [0056], [0066], [0084], [0098]-[0099], [0107] and [0116]. | 1-13 |
| Y | KR 10-2001-0086974 A (KOREA INSTITUTE OF SCIENCE AND TECHNOLOGY) 15 September 2001 (2001-09-15)<br>See claims 1-5; and example 3. | 1-13 |
| A | KR 10-2008-0009654 A (MATSUSHITA ELECTRIC INDUSTRIAL CO., LTD.) 29 January 2008 (2008-01-29)<br>See entire document. | 1-13 |
| A | JP 2006-244813 A (NEC CORP.) 14 September 2006 (2006-09-14)<br>See entire document. | 1-13 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 April 2024** | **17 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| | International application No. |
| --- | --- |
| | **PCT/KR2023/021388** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2009-0021768 A (SAMSUNG SDI CO., LTD.) 04 March 2009 (2009-03-04)<br>See entire document. | 1-13 |

Form PCT/ISA/210 (second sheet) (July 2022)

INTERNATIONAL SEARCH REPORT
Information on patent family members

International application No.

**PCT/KR2023/021388**

| Patent document cited in search report | | | Publication date (day/month/year) | Patent family member(s) | | | Publication date (day/month/year) |
|---|---|---|---|---|---|---|---|
| KR | 10-2014-0089643 | A | 16 July 2014 | None | | | |
| KR | 10-2001-0086974 | A | 15 September 2001 | None | | | |
| KR | 10-2008-0009654 | A | 29 January 2008 | CN | 101355145 | A | 28 January 2009 |
| | | | | CN | 101355145 | B | 22 June 2011 |
| | | | | JP | 2008-053214 | A | 06 March 2008 |
| | | | | JP | 5238195 | B2 | 17 July 2013 |
| | | | | KR | 10-0940695 | B1 | 08 February 2010 |
| | | | | US | 2008-0020281 | A1 | 24 January 2008 |
| | | | | US | 7964307 | B2 | 21 June 2011 |
| JP | 2006-244813 | A | 14 September 2006 | JP | 4945906 | B2 | 06 June 2012 |
| KR | 10-2009-0021768 | A | 04 March 2009 | KR | 10-1429763 | B1 | 19 August 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220183765
- JP 2009080971 A